# EUROPEAN PATENT APPLICATION

(11) **EP 1 059 719 A2**
(43) Date of publication of application: **13.12.2000**
(21) Application number: 00109167.7
(22) Date of filing: 08.05.2000
(51) Int. Cl.: H02G 9/10, H02B 7/08, H02B 1/56

(54) **Underground electronic equipment housing**

(30) Priority: 04.06.1999 AU 3319399
(71) Applicant: ALCATEL, 75008 Paris (FR)
(72) Inventor: Mowat, Scott, Bondi Junction, New South Wales 2022 (AU); Counsell, Matthew, Ryde, New South Wales 2112 (AU); Morrison, James Crowther, Thornleigh, New South Wales 2120 (AU); Brice, Lindsay, Glebe, New South Wales 2037 (AU)
(74) Representative: Dreiss, Fuhlendorf, Steimle & Becker, Patentanwälte

(57) **Abstract**

In an underground equipment housing, the equipment 4 is mounted on a pivotable lid 2 to provide access for service and maintenance. A spring 5 counterbalances the lid to reduce the lifting load required to open the lid.

## Description

### Technical Field

This invention relates to housing for equipment. A particular application of the invention is an underground equipment housing. The embodiment described is an underground housing for electrical equipment such as telecommunication equipment.

Telecommunication companies (Telcos) have a commercial imperative to use underground equipment housings due to, e.g., pressure form government bodies and local authorities to remove above ground housings for aesthetic reasons.

### Background Art

One of the major problems with underground equipment housings is the difficulty in obtaining access to the equipment for service and maintenance.

Our Australian Patent Application No. PP 6512 describes an arrangement utilizing a winch and ramp to raise and lower an equipment housing from its pit.

Prior to this vehicle mounted cranes were often used to lift and replace underground housings. This created problems of co-ordination and availability of the equipment.

### Disclosure of the Invention

Our invention provides a housing having a body compartment sealably closed by a lid, the lid being pivotably mounted on the body compartment, wherein the equipment is mounted on the lid so that, when the lid is in the open position, the equipment is accessible.

Preferably, the lid is counterbalanced to reduce the effective load when opening or closing the lid.

In a preferred embodiment, the counterbalance is provided by a spring.

In a further embodiment, damping means are provided to control the closing of the lid.

### Brief description of Drawings

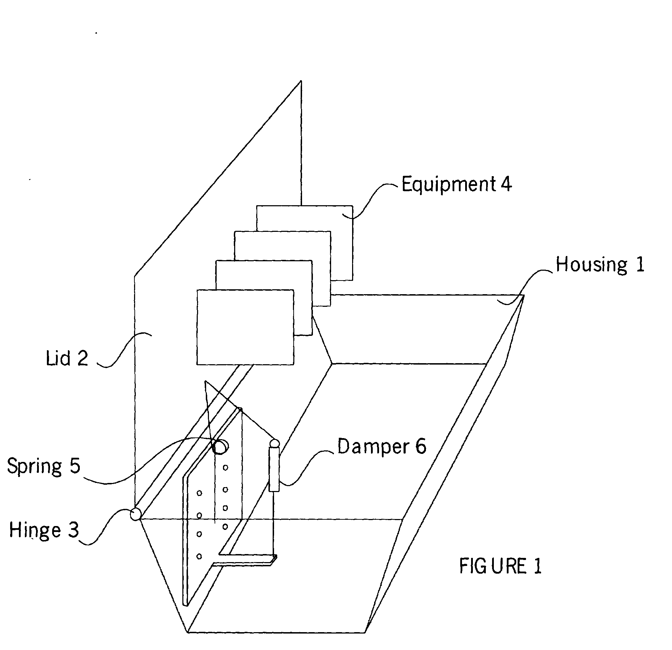

Figure 1 illustrates the elements of a housing embodying the invention.

### Best mode of carrying out the invention

The invention will be described with reference to figure 1, in which the equipment housing includes a body 1 with a pivotable lid 2 hinged at 3 along one side of the body 1. Equipment 4 such as electric cards for carrying out telecommunication functions are mounted on the lid 2.

The shape of the housing is not critical to the invention and could, for example, be cylindrical. However we have found that where a rectangular section is used, it is preferable to attach the lid hinge to the short side so that some of the equipment is raised higher than would be the case if the hinge were on the long side.

The electronic cards 4 would normally be attached to cables which would enter and exit the housing via watertight seals, sufficient spare cable being provided in the housing to permit the lid to be raised freely.

In the illustrated embodiment, counterbalance means are provided by a spring 5 which is mounted to react against the lid and the housing to reduce the load when opening and closing the lid. The spring may be adjusted to reduce the initial lifting load, for example, from 40 kg to less than 5 kg, preferably to about 2 kg to meet occupational safety requirements.

Optionally a pneumatic damper 6 provided to prevent the lid dropping abruptly.

In a further embodiment a pair of springs and dampers are provided. This reduces the physical size of a single spring required to perform the same function.

Preferably the spring and damper can be assembled as a single unit and mounted on the wall of the housing, e.g., using a mounting plate 7.

In the open position the spring 5 holds the lid in place to enable the technician to work on the equipment 4.

The lid and housing may have a resilient seal provided by known means.

## Claims

1. An equipment housing arrangement providing ready access to the equipment, wherein the equipment (4) is mounted on a pivotable lid (2) of the housing (1) wherein the equipment can be accessed when the lid is pivoted to the open position.

2. An arrangement as claimed in claim 1 wherein the housing is an underground housing and the lid is pivotable, the lid being counterbalanced to reduce the initial lifting load.

3. An arrangement as claimed in 3 wherein the counterbalance is provided by a spring (5).

4. An arrangement as claimed in 2 or claim 3 wherein the pivoting of the lid is damped (6).

5. An arrangement as claimed in any one of the claims 1 to 4 wherein the housing has a rectangular section and wherein, the lid is pivoted on the short side to take advantage of the additional height when the lid is open.

6. An arrangement as claimed in any one of claims 1 to 5 wherein sealing means are provided to form a watertight seal between the lid and the body when the lid is closed.

7. An equipment housing arrangement substantially as herein described with reference to the accompanying drawings.
